# EUROPEAN PATENT APPLICATION

(11) **EP 3 641 007 A1**
(43) Date of publication of application: **22.04.2020**
(21) Application number: 19186934.6
(22) Date of filing: 18.07.2019
(51) Int. Cl.: H01M 2/10, B60K 1/04

(54) **POWER STORAGE UNIT AND POWER STORAGE DEVICE**

(30) Priority: 19.10.2018 JP 2018197407
(71) Applicant: TOYOTA JIDOSHA KABUSHIKI KAISHA, Toyota-shi, Aichi 471 8571 (JP)
(72) Inventor: YAMANAKA, Atsushi, Toyota-shi,, Aichi 471-8571 (JP)
(74) Representative: TBK

(57) **Abstract**

A power storage unit (100) housed in a battery case (10), includes: a plurality of battery cells (116); end plates (114); and first member (112; 112L; 112M1, 112M2). The plurality of battery cells (116) is arranged side by side in the first direction. The end plates (114) are disposed at both ends of the plurality of battery cells (116) arranged side by side in the first direction. The first member (112; 112L; 112M1, 112M2) extends in the first direction of the battery cells (116) and couples the end plates (114) disposed at both ends of the battery cells (116). The first member (112; 112L; 112M1, 112M2) includes a second member (200) fixed to the battery case (10).

## Description

### BACKGROUND OF THE INVENTION

### 1. Field of the Invention

The present disclosure relates to a power storage unit and a power storage device.

### 2. Description of Related Art

Various proposals have been made for structures of power storage units. For example, in a power storage unit described in Japanese Patent Application Publication No. 2013-222554, disclosed is, as a restraint structure of battery cells included in a power storage unit, a structure to fasten a stack body of a plurality of battery cells by using end plates disposed at both ends of stacked battery cells, intermediate plates disposed in an intermediate part, and fastening members for fastening the plurality of battery cells in a stacked state to the end plates and the intermediate plates.

### SUMMARY OF THE INVENTION

In recent years, it has been required to further increase the capacity of a storage unit. Hence, it is preferable that the number of battery cells stacked and disposed is as large as possible, and providing intermediate plates disposed in the intermediate part is not preferable for increasing the capacity of the power storage unit. To the contrary, by providing the intermediate plates in the intermediate part and fastening the plurality of battery cells using the fastening members, rigidity of the entire power storage unit is increased, which is preferable for the vibration resistance. When no intermediate plates are provided, bundling between the intermediate plates and the fastening members is not secured, which causes such a problem that the rigidity of the entire power storage unit is decreased and the vibration resistance is thus deteriorated.

The present disclosure copes with both higher capacity and vibration resistance of the power storage unit.

A first aspect of the present invention is a power storage unit housed in a battery case. The power storage unit includes: a plurality of battery cells; end plates; and a first member. The plurality of battery cells are arranged side by side in the first direction. The end plates are disposed at both ends of the plurality of battery cells arranged side by side in the first direction. The first member extends in the first direction of the battery cells and couples the end plates disposed at the both ends of the battery cells. The first member includes a second member fixed to the battery case.

With the above configuration, it is possible to cope with both higher capacity and vibration resistance of the power storage unit.

In the power storage unit, the second member may be provided in the first members at least at three locations along the first direction of the battery cells.

In the power storage unit, two first members may be disposed along both side surfaces of the battery cells arranged side by side in the first direction. The first member on first side surfaces of the battery cells may be provided with the second member at least at one location along the first direction of the battery cells. The first member on second side surfaces of the battery cells may be provided with the second members at least at two locations along the first direction of the battery cells.

In the power storage unit, in the first direction of the battery cells, the first member may include: a side portion located on the side surfaces of the battery cells; and a flange portion extending inward of the battery cells from at least at one end of the side portion.

In the power storage unit, the first member may include a pair of flange portions extending inward of the battery cells from both ends of the side portion.

In the power storage unit, the first member may include the flange portion extending toward upper surfaces or lower surfaces of the battery cells from the one end of the side portion.

In the power storage unit, the first member and the end plates may be joined by welding.

In the power storage unit, the battery case may include a beam member, and the second member may be fixed to the beam member.

A second aspect of the present invention is a power storage device. The power storage device includes: a power storage unit; and a battery case housing the power storage unit. The power storage unit includes: a plurality of battery cells; end plates; and a first member. The plurality of battery cells are arranged side by side in the first direction. The end plates are provided at both ends of the plurality of battery cells arranged side by side in the first direction. The first member extends in the first direction of the battery cells and couples the end plates disposed at both ends of the battery cells. The battery case includes a beam member, and the second member is fixed to the beam member. The first member includes a second member fixed to the battery case.

With the above configuration, it is possible to cope with both higher capacity and vibration resistance of the power storage unit.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view schematically showing a vehicle of a first embodiment;
FIG. 2 is a perspective view schematically showing only a power storage device of the first embodiment;
FIG. 3 is a plan view of the power storage device with a lid removed in the first embodiment;
FIG. 4 is a perspective view showing the power storage unit of the first embodiment;
FIG. 5 is a perspective view showing the battery pack of the first embodiment;
FIG. 6 is a sectional view taken along an arrow line VI-VI in FIG. 5;
FIG. 7 is a schematic plan view showing an example of an arrangement of second members provided in the power storage unit of the first embodiment;
FIG. 8 is a sectional view taken along an arrow line VIII in FIG. 3;
FIG. 9 is a sectional view corresponding to the sectional view taken along line VIII in FIG. 3 of a second embodiment;
FIG. 10 is a sectional view showing another form of the first member shown in FIG. 9;
FIG. 11 is a schematic plan view showing another example of the arrangement of the second members in a third embodiment;
FIG. 12 is a schematic plan view showing yet another example of the arrangement of the second members in the third embodiment;
FIG. 13 is a schematic view showing another example of a fixing structure of the second members of a fourth embodiment;
FIG. 14 is a schematic view showing another form of the first members of the fourth embodiment;
FIG. 15 is a schematic view showing yet another form of the first member of the fourth embodiment; and
FIG. 16 is a schematic view showing yet another form of the first member of the fourth embodiment.

### DETAILED DESCRIPTION OF EMBODIMENTS

Hereinafter, a power storage unit and a power storage device of the present embodiment will be described with reference to the drawings for each embodiment. In the embodiments described below, when referring to the number, the amount and the like, it is not necessarily limited to the number, the amount and the like unless otherwise specified. The same components and corresponding components are denoted by the same reference numerals, and duplicate descriptions may not be repeated. It is planned from the beginning to use appropriately combinations of the configurations in the embodiments. In the drawings, the actual dimensional proportions are not described, but in order to facilitate the understanding of the structure, the proportions are described to be partially different.

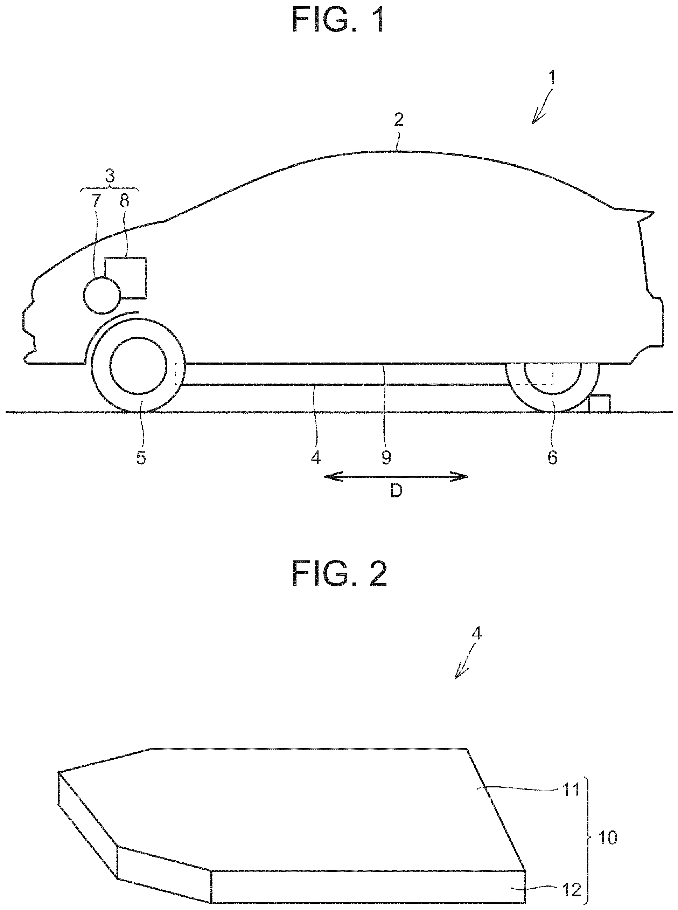

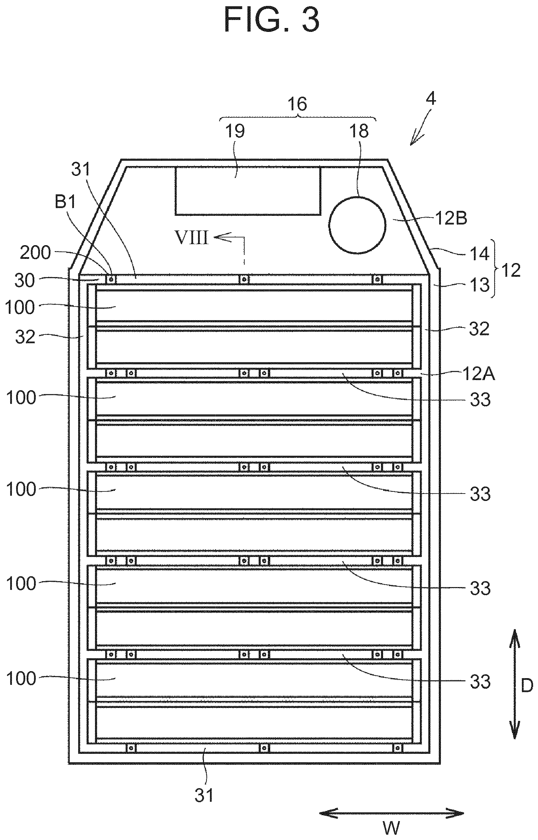

With reference to FIGS. 1 to 3, the power storage device of the present embodiment will be described. FIG. 1 is a schematic view schematically showing a vehicle 1, FIG. 2 is a perspective view schematically showing only a power storage device 4, and FIG. 3 is a plan view of the power storage device 4 with a lid removed.

With referring to FIG. 1, the vehicle 1 includes a vehicle body 2, a drive device 3, the power storage device 4, front wheels 5, and rear wheels 6. Each front wheel 5 is provided frontward of the center in a front-rear direction D of the vehicle 1, and each rear wheel 6 is provided behind the center of the front-rear direction D.

The vehicle body 2 includes a boarding space, a front accommodation space, and a rear accommodation space. The boarding space is a space where occupants including a driver get in. The rear accommodation space is formed behind the boarding space. Luggage and others are accommodated in the rear accommodation space. The front accommodation space is formed frontward of the boarding space. The drive device 3 and others are accommodated in the front accommodation space.

The vehicle body 2 includes a skeletal frame, and the skeletal frame includes a floor panel 9. The floor panel 9 forms a bottom surface of the vehicle body 2.

The drive device 3 includes a rotary electric machine 7 and a PCU (Power Control Unit) 8. The PCU 8 is electrically connected to the rotary electric machine 7 and the power storage device 4. The PCU 8 includes an inverter and a converter. The rotary electric machine 7 is mechanically connected to each front wheel 5.

The power storage device 4 is provided on a lower surface of floor panel 9. The power storage device 4 supplies DC power to PCU 8. The PCU 8 boosts the supplied DC power and then converts the DC power to AC power. The rotary electric machine 7 uses the AC power supplied from the PCU 8 to generate a driving force for rotating the front wheels 5.

The vehicle 1 is an example of an electric vehicle, but may be a plug-in hybrid vehicle or a hybrid vehicle.

With reference to FIG. 2, the power storage device 4 includes a battery case 10. The battery case 10 includes a lid 11 and a case body 12. The case body 12 is formed with an opening that opens upward. The case body 12 is formed of, for example, a metal material such as an aluminum alloy. The case body 12 is fixed to the floor panel 9. The lid 11 is provided on the case body 12 so as to close the opening of the case body 12. The lid 11 is made of, for example, resin or the like, and thus weight reduction of the battery case 10 is achieved.

With referring to FIG. 3, the power storage device 4 includes the case body 12, mounted equipment 16 housed in the case body 12, and a plurality of power storage units 100. The case body 12 includes a bottom plate 14 and a peripheral wall 13 extending along an outer periphery of the bottom plate 14.

The case body 12 includes a main body portion 12A in which the plurality of power storage units 100 are disposed, and an overhang portion 12B in which the mounted equipment 16 is disposed. The main body portion 12A is formed in a substantially rectangular parallelepiped shape. The overhang portion 12B is formed to project frontward from a front end of the main body portion 12A. The overhang portion 12B is formed in a trapezoidal shape in such a manner that a length in the width direction W of the vehicle body 2 becomes shorter as it goes frontward from a connection part with the main body portion 12A.

The mounted equipment 16 is provided in the overhang portion 12B. The mounted equipment 16 includes a cooling device 18 and a junction box 19. The cooling device 18 cools the power storage units 100.

A beam member 30 is arranged in the main body portion 12A. The beam member 30 includes an outer frame cross beam member 31 fixed on the bottom plate 14, outer frame longitudinal beam members 32, and inner frame cross beam members 33. The power storage unit 100 is mounted in each rectangular region defined by the respective beam members. The outer frame cross beam member 31 and the inner frame cross beam members 33 are provided so as to extend in a width direction W, and are also provided so as to extend in the front-rear direction D of the outer frame longitudinal beam members 32.

Each storage unit 100 is provided with second members 200 described later, and the power storage units 100 are fixed to the respective beam members by fastening the second members 200 to the respective beam members using bolts B1.

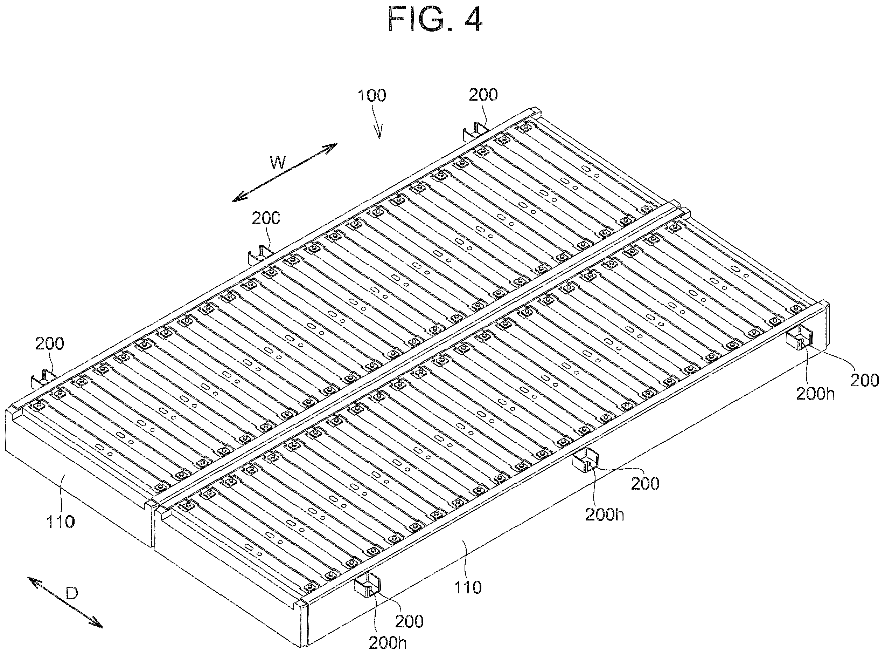

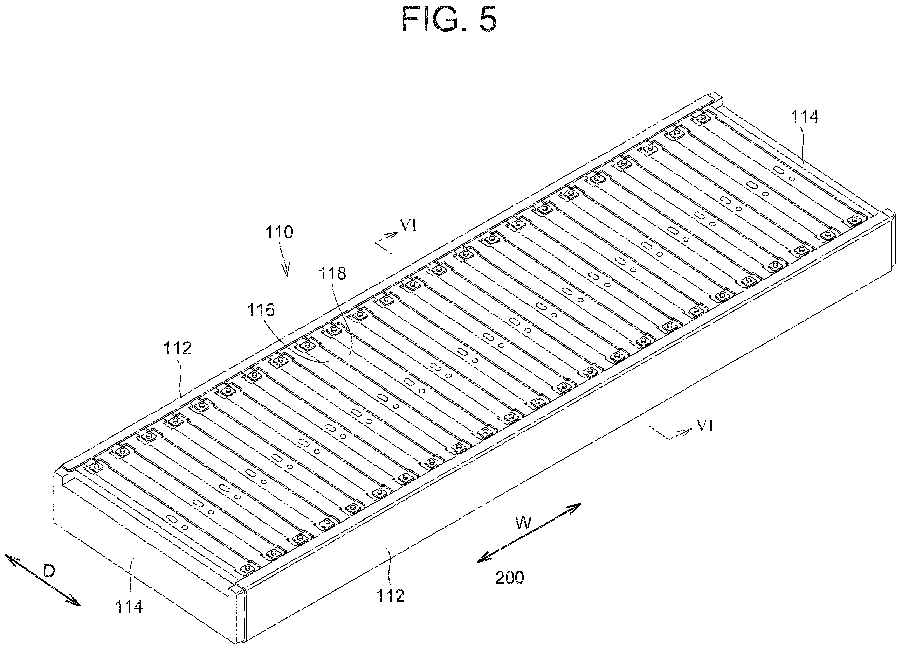

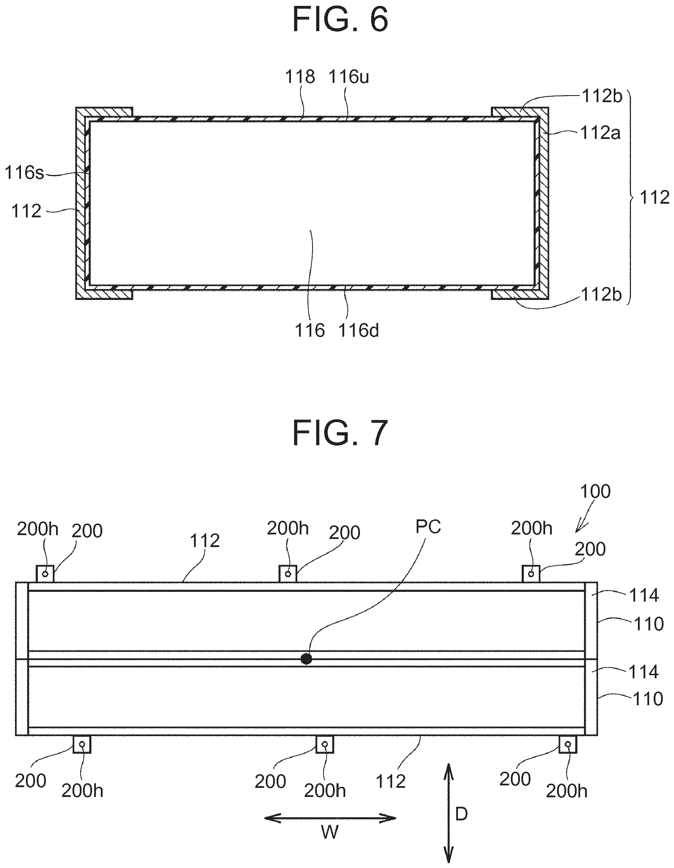

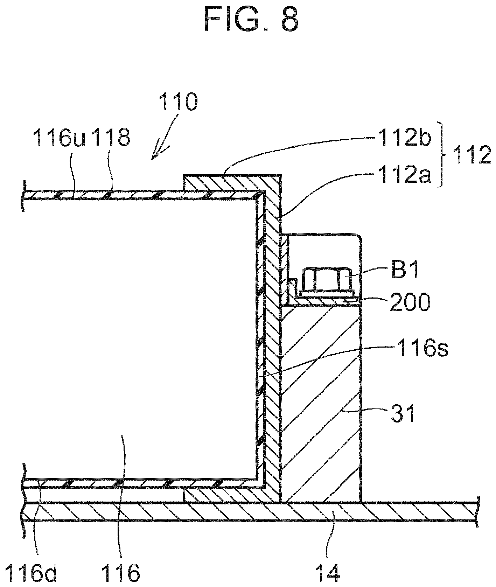

A configuration of each storage unit 100 will be described with reference to FIGS. 4 to 8. FIG. 4 is a perspective view showing the power storage unit 100, FIG. 5 is a perspective view showing a power storage pack 110, FIG. 6 is a sectional view taken along line VI-VI in FIG. 5, FIG. 7 is a schematic plan view showing an example of the arrangement of the second members provided to the power storage unit, and FIG. 8 is a sectional view taken along an arrow line VIII in FIG 3.

With reference to FIG. 4, the power storage unit 100 of the present embodiment is a combination of the power storage packs 110 in two rows. A plurality of second members 200 are arranged on an outer peripheral surface of the power storage unit 100. The second members 200 are provided at six locations in total, that is, at three locations on one outer peripheral surface of the power storage unit 100 and at three locations on the other outer peripheral surface of the power storage unit 100. Each second member 200 is provided with a bolt hole 200h for allowing the bolt B1 to pass therethrough.

With reference to FIG. 5, in each power storage pack 110, battery cells 116 and resin frames 118 are alternately stacked. Metal end plates 114 are disposed at both ends in the stacking direction of the battery cells 116, which is a first direction (direction indicated by an arrow W in the drawing).

With reference to FIG. 6, there are respectively disposed metal first members 112 along both side surfaces 116s of the battery cells 116 so as to couple the end plates 114 located at both ends. Each of the first members 112 has a form extending in the first direction of the battery cells 116, and includes: a side portion 112a so located as to face the side surfaces 116s of the battery cells 116; and a pair of flange portions 112b extending inward, on upper surfaces 116u and lower surfaces 116d of the battery cells 116 from both longitudinal ends of the side portion 112a.

Again, with reference to FIG. 5, both ends in the first direction (direction W) of the first member 112 are in contact with the respective end plates 114, and the first member 112 and the end plates 114 are integrally fixed to each other by welding. The fixation between the first members 112 and the end plates 114 is not limited to welding, and a fastening structure using bolts may be employed.

With reference to FIG. 7, the power storage packs 110 arranged in every two rows are fixed to each other by welding, bolt fastening, or the like. In the present embodiment, the power storage packs 110 are arranged in every two rows, but the number thereof may be a single row or three or more rows.

The second members 200 are fixed to a side surface of each first member 112 located on the outer peripheral surface of the power storage unit 100, at three locations along the first direction of the battery cells 116. Respective positions of the opposing second members 200 located on both side surfaces of the first members 112 are offset from each other in the longitudinal direction (W direction), and the opposing second members 200 are arranged to be point symmetric to each other relative to a position of center PC in the length direction (W direction) and the width direction (D direction) of the power storage unit 100.

Female screw holes used for fastening with the bolts B1, and others are previously provided in the outer frame cross beam member 31, the outer frame longitudinal beam member 32, and the inner frame cross beam member 33 that are provided to the case body 12 at respective positions to which the second members 200 correspond.

This arrangement of the second members 200 eliminates directionality of the power storage units 100 in the W direction when the power storage units 100 are mounted in the case body 12, thus promoting workability at the time of installation of the power storage units 100. In addition, by sharing a single inner frame cross beam member 33, every two power storage units 100 can be fixed on both sides of this inner frame cross beam member 33; thus, it is possible to save the space in the case body 12 when the power storage units 100 are mounted in the case body 12.

As shown in the sectional view of FIG. 8, for example, in a state where each power storage pack 110 is mounted at a predetermined position in the case body 12, the second member 200 is positioned on the upper surface of the outer frame cross beam member 31, and each power storage pack 110 is fixed to the outer frame cross beam member 31 with the bolts B1. Other coupling portions are same as above.

Thus, by employing such a structure that fixes the power storage packs 110 using the beam members such as the outer frame cross beam member 31, the outer frame longitudinal beam member 32, and the inner frame cross beam member 33 that are provided to the case body 12, it becomes possible to hold the power storage packs 110 firmly. As a result, rigidity of the power storage unit 100 is secured without providing intermediate plates for reinforcement in the intermediate part of the power storage packs 110, to thereby promote enhancement of the vibration resistance of the storage unit 100 as well.

Further, since it is unnecessary to provide the intermediate plates, the number of mounted battery cells 116 can be increased. As a result, the capacity of the power storage unit 100 can be highly increased.

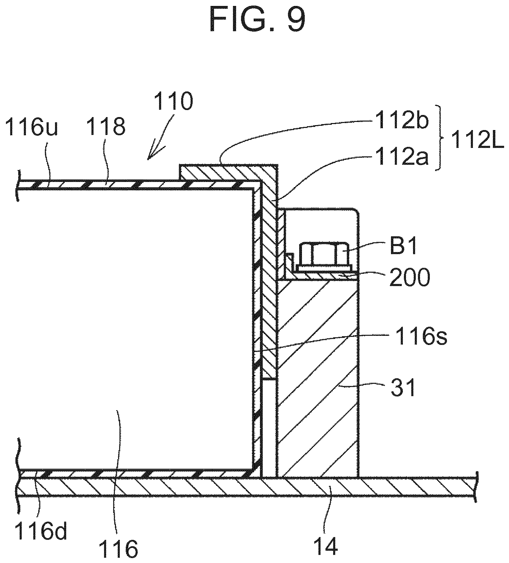

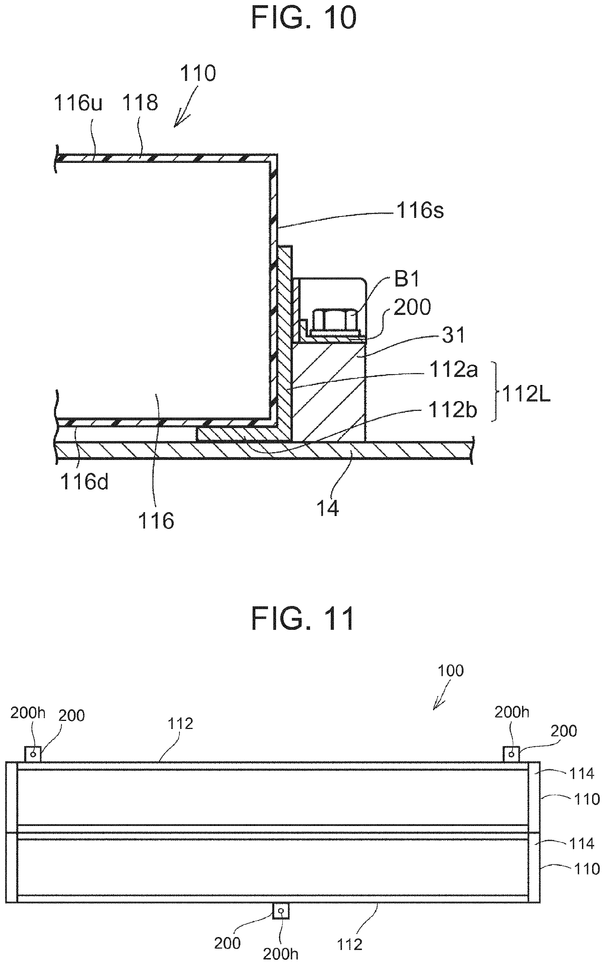

Another form of the first member will be described with reference to FIGS. 9 and 10. FIG. 9 is another sectional view corresponding to the section taken along an arrow line VIII in FIG. 3, and FIG. 10 is a sectional view showing another form of the first member shown in FIG. 9.

In the above description, as shown in FIG. 8, the case of employing, as the first member 112, a (C-shaped) form having a pair of flange portions 112b extending inward of the battery cells 116 from both longitudinal ends of the side portion 112a has been described. On the other hand, as shown in FIG. 9 there may be employed, as a first member 112L in another form, a (L-shaped) form having only a single flange portion 112b extending inward of the upper surface 116u of each battery cell 116 from one longitudinal end of the side portion 112a.

In this case, the first member 112L may be disposed on the upper surface of the battery cell 116. By fastening the second members 200 provided to the first member 112L to the outer frame cross beam member 31 using the bolt B1, a pressing force onto the bottom plate 14 side of the battery cell 116 can be generated by the first member 112L.

In the case where a cooling mechanism for the power storage pack 110 is provided on the surface of the bottom plate 14 opposite to the power storage pack 110, a contact area between the cooling mechanism and the battery cell 116 can be increased, and the cooling efficiency of the battery cells 116 can be thus improved.

As a configuration inverse to the configuration shown in FIG. 9, as the first member 112L in another form shown in FIG. 10, there may be employed a (L-shaped) form having only a single flange portion 112b extending inward of a lower surface 116d of each battery cell 116 from one longitudinal end of the side portion 112a.

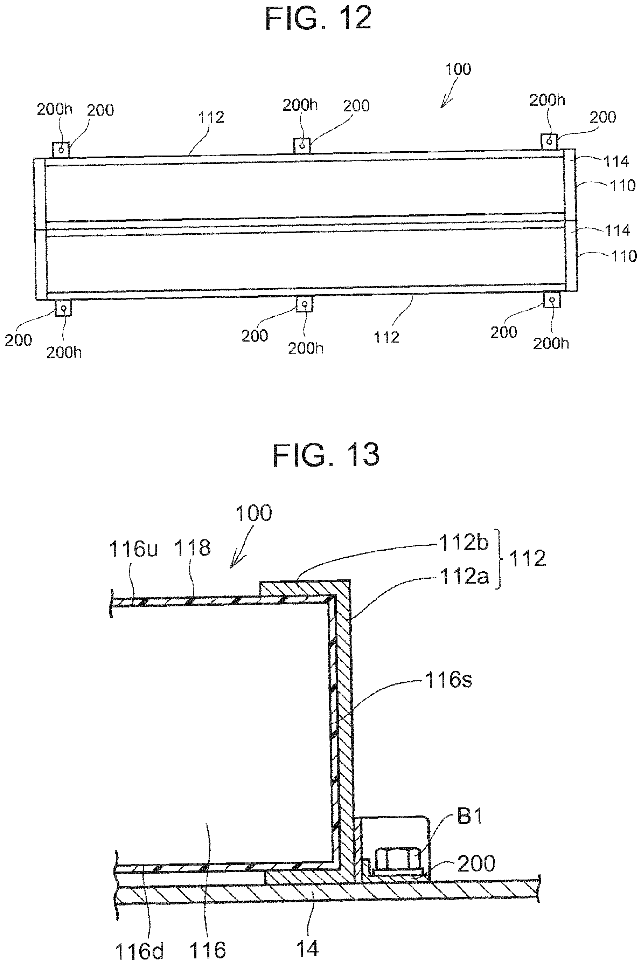

With reference to FIG. 11 and FIG. 12, another arrangement of the second members 200 provided on the outer peripheral surface of the power storage unit 100 will be described with reference to FIGS. 11 and 12. FIG. 11 is a schematic plan view showing another example of the arrangement of the second members 200, and FIG. 12 is a schematic plan view showing yet another example of the arrangement of the second members.

Besides the arrangement form of the second members 200 shown in FIG. 7, considering improvement of the rigidity and enhancement of the vibration resistance of the power storage unit 100, as shown in FIG. 11, the second members 200 are provided at two locations along the first direction of the battery cells 116 on one side surface of the first members 112, and the second member 200 is provided at one location on the other side surface of the other first member 112. There may be employed for each second member 200 such a configuration that fixes each power storage pack 110 to the beam member at three locations in total. As in the case of the first embodiment, this configuration can also promote enhancement of the vibration resistance of the power storage unit 100 as well as higher capacity of the power storage unit 100.

In the arrangement of the second member 200 shown in FIG. 7, such a configuration that shifts the opposing second members 200 in the longitudinal direction (W direction) is adopted, but as shown in FIG. 12, the second members 200 may be arranged at positions where the opposing second members 200 face each other. In this case, because it is necessary to arrange the beam members in correspondence with the respective first members 112, the above arrangement can be adopted if there is allowance for the capacity of the case body 12.

With reference to FIG. 13, another form of the fixing structure that fixes each power storage unit 100 to the battery case 10 will be described. FIG. 13 is a schematic view showing another example of the fixing structure of the second members.

In FIG. 8 and FIG. 9, the structure that fixes each second member 200 provided to the first member 112 to the beam member of the case body 12 has been described; however, as shown in FIG. 13, such a configuration that directly fixes each second member 200 to the bottom plate 14 of the case body 12 may be adopted. This configuration can be adopted when the case body 12 has such a sufficient rigidity that no beam members are necessarily provided.

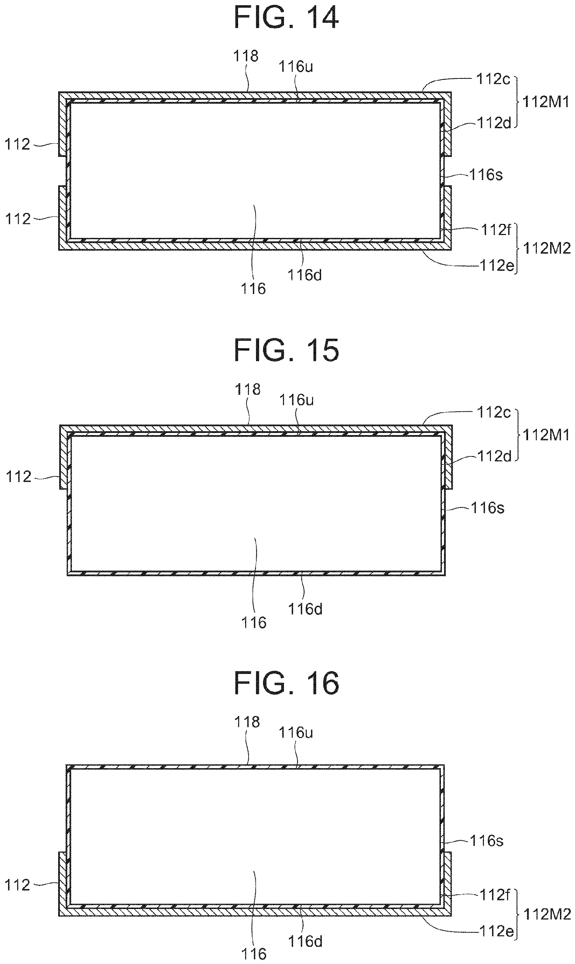

Another mode of first members 112M1, 112M2 will be described with reference to FIGS. 14 to 16. FIGS. 14 to 16 are schematic views showing other forms of the first member, and are sectional views taken along an arrow line VI-VI in FIG 5.

The first member 112 shown in FIG. 6 is configured to have a side portion 112a covering the side surface 116s of each battery cell 116; and a configuration shown in FIG. 14 includes the first member 112M1 and the first member 112M2.

The first member 112M1 includes an upper surface portion 112c covering the upper surface 116u of each battery cell 116, and side surface portions 112d extending toward the side surfaces 116s of each battery cell 116 at both ends of the upper surface portion 112c.

The first member 112M2 includes a lower surface portion 112e covering the lower surface 116d of each battery cell 116, and side surface portions 112f extending toward the side surfaces 116s of each battery cell 116 at both ends of the lower surface portion 112e.

In this configuration, each second member 200 is provided to the side surface portion 112d and/or the side surface portion 112f.

By adopting this configuration, it is also possible to obtain the same effect as that of the above embodiment.

As shown in FIG. 15, the configuration that provides the first member 112M1 on the upper surface 116u of each battery cell 116 may be adopted, or as shown in FIG. 16, the configuration that provides the first member 112M2 on the lower surface 116d of each battery cell 116 may be adopted.

As described above, it should be understood that the embodiments disclosed herein are illustrative and non-restrictive in every respect. The scope of the present invention is indicated by the claims, and is intended to include all modifications within the meaning and scope equivalent to the claims.

A power storage unit (100) housed in a battery case (10), includes: a plurality of battery cells (116); end plates (114); and first member (112; 112L; 112M1, 112M2). The plurality of battery cells (116) is arranged side by side in the first direction. The end plates (114) are disposed at both ends of the plurality of battery cells (116) arranged side by side in the first direction. The first member (112; 112L; 112M1, 112M2) extends in the first direction of the battery cells (116) and couples the end plates (114) disposed at both ends of the battery cells (116). The first member (112; 112L; 112M1, 112M2) includes a second member (200) fixed to the battery case (10).

## Claims

1. A power storage unit (100) housed in a battery case (10), the power storage unit (100) comprising:
a plurality of battery cells (116) arranged side by side in a first direction;
end plates (114) disposed at both ends of the plurality of battery cells (116) arranged side by side in the first direction; and
a first member (112) extending in the first direction of the battery cells (116) and coupling the end plates (114) disposed at both the ends of the battery cells (116),
the first member (112;112L;112M1,112M2) including a second member (200) fixed to the battery case (10).

2. The power storage unit (100) according to claim 1, wherein the second member (200) is provided in the first member (112;112L;112M1,112M2) at least at three locations along the first direction of the battery cells (116).

3. The power storage unit (100) according to claim 2, wherein
two first members (112; 112L) are disposed along both side surfaces of the battery cells (116) arranged side by side in the first direction,
the first member (112; 112L) on first side surfaces of the battery cells (116) is provided with the second member (200) at least at one location along the first direction of the battery cells (116), and
the first member (112; 112L) on second side surfaces of the battery cells (116) is provided with the second members (200) at least at two locations along the first direction of the battery cells (116).

4. The power storage unit (100) according to any one of claims 1 to 3, wherein in the first direction of the battery cells, the first member (112; 112L) includes:
a side portion (112a) located on a side surfaces of the battery cells; and
a flange portion (112b) extending inward of the battery cells from at least one end of the side portion (112a).

5. The power storage unit according to claim 4, wherein the first member (112) includes a pair of flange portions (112b) extending inward of the battery cells (116) from both ends of the side portion.

6. The power storage unit according to claim 4, wherein the first member (112; 112L) includes the flange portion (112b) extending toward upper surfaces or lower surfaces of the battery cells from the one end of the side portion.

7. The power storage unit according to any one of claims 1 to 6, wherein the first member (112) and the end plates (114) are joined by welding.

8. The power storage unit according to any one of claims 1 to 7, wherein the battery case (10) includes a beam member (30), and the second member (200) is fixed to the beam member (30).

9. A power storage device comprising:
a power storage unit (100),
the power storage unit (100) including a plurality of battery cells (116), end plates (114), and a first member (112; 112L; 112M1; 112M2),
the plurality of battery cells (116) being arranged side by side in a first direction,
the end plates (114) being provided at both ends of the plurality of battery cells (116) arranged side by side in the first direction,
the first member (112; 112L; 112M1, 112M2) extending in the first direction of the battery cells (116) and coupling the end plates (114) disposed at both ends of the battery cells (116); and
a battery case housing the power storage unit, the battery case including a beam member (30), a second member (200) being fixed to the beam member (30),
the first member (112; 112L; 112M1, 112M2) including the second member (200) fixed to the battery case (10).
